# EUROPEAN PATENT SPECIFICATION

(11) **EP 2 722 590 B1**
(45) Date of publication and mention of the grant of the patent: **04.09.2019**
(21) Application number: 13160938.0
(22) Date of filing: 25.03.2013
(51) Int. Cl.: C02F 1/42, B01D 61/02, C02F 1/44, F22D 11/00, C02F 1/28

(54) **Steam plant and method of operating the same**
Dampfanlage und Verfahren zum Betrieb davon
Centrale à vapeur et son procédé de fonctionnement

(30) Priority: 30.03.2012 GB 201205630
(43) Date of publication of application: 23.04.2014
(73) Proprietor: Spirax-Sarco Limited, Cheltenham, Gloucestershire GL53 8ER (GB)
(72) Inventor: Griffin, Mike, Cheltenham, Gloucestershire GL51 9NQ (GB)
(74) Representative: Haseltine Lake Kempner LLP

(56) References cited:
- CA-A1- 2 671 255
- US-A1- 2007 125 719
- US-A1- 2010 192 575
- SCHALLERT B ET AL: "UMKEHROSMOSEANLAGE IM KRAFTWERK SCHKOPAU ERSTE BETRIEBSERFAHRUNGEN", VGB KRAFTWERKSTECHNIK, VGB KRAFTWERKSTECHNIK GMBH. ESSEN, DE, vol. 79, no. 8, 1 January 1999 (1999-01-01), pages 77-80, XP000847467, ISSN: 0372-5715

## Description

The invention relates to a steam plant, a method of operating the same, and a method of upgrading an existing steam plant.

In an industrial and heating process utilising steam, steam is generated in a boiler and is transferred through pipework at high temperature and pressure to various industrial processes where the energy in the steam is utilised.

It is important to control the quality of the raw water fed to the boiler in order to prevent undesirable effects from occurring within the steam plant. These undesirable effects include corrosion of the metal components of the plant, such as pipework and valves, and the reduction of heat transfer rates which can lead to overheating and the loss of mechanical strength of components.

CA 2 671 255 discloses a method for producing steam comprising the successive steps of: providing feedwater containing carbonate and/or sulphate ions; adding a crystallizing reagent able to react with carbonate and/or sulphate ions to the feedwater, in order to produce carbonate and/or sulphate crystals; filtering the feedwater with a ceramic membrane to produce a permeate stream; supplying the permeate stream to a boiler; and generating steam in the boiler.

Water is referred to as being either "hard" or "soft"'. Hard water contains scale-forming impurities while soft water contains little or none. Hardness is caused by the presence of the mineral salts of calcium and magnesium and it is these minerals that encourage the formation of scale. If hard water is supplied to the boiler then scaling of the heat transfer surfaces will occur and this will reduce the heat transfer and efficiency of the boiler. Further, if the water supplied to the boiler contains dissolved gases, particularly oxygen, the corrosion of the boiler surfaces, pipework and other surfaces is likely to occur. If the pH value of the water is too low, the acidic solution will attack metal surfaces, and if the pH value is too high and the water is alkaline, other problems such as foaming may occur.

It is also desirable to prevent boiler water from being carried over from the boiler to the steam system as this can result in the contamination of control valves and heat transfer surfaces, and the restriction of steam trap orifices. Carryover is typically caused by either "priming" or "foaming". Priming is the ejection of boiler water into the steam take-off and is generally due to either operating the boiler with too high a water level, operating the boiler below its design pressure, or excessive steam demand. Foaming is the formation of foam in the space between the water surface and the steam take-off and is primarily due to a high-level of impurities in the boiler water.

As the boiler generates steam, any impurities which are in the boiler water and which do not boil off with the steam will concentrate in the boiler water. As the amount of total dissolved solids (TDS) become more and more concentrated, the steam bubbles tend to become more stable, failing to burst as they reach the water surface of the boiler. Eventually, a substantial part of the steam space in the boiler becomes filled with bubbles and foam is carried over into the main part of the steam plant. It is therefore desirable to carefully control the amount of total dissolved solids (TDS) in the boiler water. The TDS value of the boiler water is monitored using a sensor and water known as blowdown water is discharged from the boiler to a blowdown vessel in order to maintain the TDS value within acceptable limits. Conventional boilers may be operated with the TDS in the range of 2000-3500 ppm. The blowdown water is mixed with colder water in the blowdown vessel and is then discharged to a drain.

Table 1 below shows the technical and commonly used names of some typical impurities in water, their chemical symbols, and their effects.

**Table 1**

| **Name** | **Symbol** | **Common name** | **Effect** |
|---|---|---|---|
| Calcium carbonate | CaCO₃ | Chalk, limestone | Soft scale |
| Calcium bicarbonate | Ca(HCO₃)₂ | | Soft scale + CO₂ |
| Calcium sulphate | CaSO₄ | Gypsum, plaster of paris | Hard scale |
| Calcium chloride | CaCl₂ | | Corrosion |
| Magnesium carbonate | MgCO₃ | | Soft scale |
| Magnesium sulphate | MgSO₄ | Magnesite | Corrosion |
| Magnesium bicarbonate | Mg(HCO₃)₂ | Epsom salts | Scale, corrosion |
| Sodium chloride | NaCl | Common salt | Electrolysis |
| Sodium carbonate | Na₂CO₃ | Washing soda or soda | Alkalinity |
| Sodium bicarbonate | NaHCO₃ | Baking soda | Priming, foaming |
| Sodium hydroxide | NaOH | Caustic soda | Alkalinity, embrittlement |
| Sodium sulphate | Na₂SO₂ | Glauber salts | Alkalinity |
| Silicon dioxide | SiO₂ | Silica | Hard scale |

It is known to treat raw water by removing various impurities before providing it to the boiler as feedwater so as to minimise the undesirable effects described above. For example, if the water is too hard then scale forms in the boiler, and if the TDS value is too high then the blowdown rate of the boiler must be increased in order to prevent the TDS value in the boiler from becoming too high and leading to carryover.

The water treatment system of a steam plant typically comprises a filter unit, a softener unit and a reverse osmosis unit and raw water is passed through these units sequentially.

The filter unit is typically a carbon filter and acts to remove suspended solids from the raw water. The filter must be periodically flushed in order to clean the filter and flush away debris that has built up in the filter.

The softener unit acts to reduce the hardness of the filtered water and typically comprises two softener vessels and a brine tank. Each softener vessel is provided with a resin to which sodium ions are bonded. As the filtered water is passed over the resin, the sodium ions bonded to the resin are displaced and exchanged for the calcium and magnesium ions in the water, thus reducing the hardness of the water. After a period of time, all of the sodium ions will have been displaced from the resin and replaced with calcium and magnesium ions. Therefore, the softener vessel is regenerated by flushing the resin with a strong solution of sodium chloride from the brine tank. This causes the calcium and magnesium ions bonded to the resin to be replaced with sodium ions. The softener vessel is then flushed with water so as to remove the un-bonded calcium and magnesium ions from the softener vessel. Typically, whilst one softener vessel is being used, the other is being regenerated so that water can be softened without interruption.

The reverse osmosis unit acts to reduce the TDS value of the softened water. The reverse osmosis unit comprises a semi-permeable membrane provided between two chambers. The softened water having a high TDS value is supplied to one of the chambers and pressure is applied. The applied pressure causes pure water, having a low TDS and known as permeate, to pass through the semi-permeable membrane to the other chamber. Concentrate containing a high concentration of impurities, and consequently having a high TDS value, is retained on the pressurized side of the semi-permeable membrane. The permeate is supplied to the boiler as feedwater via a feedtank, and the concentrate is discharged to a drain. The softened water supplied to the reverse osmosis unit may have a TDS value of 220 ppm and the permeate used as feedwater may have a TDS value of 23 ppm.

As should be appreciated from the above, a steam plant requires substantial volumes of water in order to operate. Specifically, raw water that is ultimately used to generate steam, cold water that can be mixed with the hot blowdown water, water for the brine tank of the softener unit, and flushing water for both the filter and the softener unit. Water is financially an expensive resource and contributes to a large proportion of the running costs of a steam plant. Further, a large proportion of this water is ultimately discharged to a drain and water authorities typically levy a charge for this. Water is a finite resource and demand on water supplies is increasing.

Therefore, from both a financial and an environmental point of view it is desirable to reduce the water consumption of a steam plant.

The invention is defined in the attached independent claims, to which reference should now be made. Further, optional features are defined in the sub-claims appended thereto.

According to an aspect of the invention, there is provided a steam plant, comprising: a boiler arranged to generate steam; a reverse osmosis unit having a RO inlet arranged to receive inflow water and a permeate outlet in fluid communication with the boiler through a permeate line, wherein in use the reverse osmosis unit receives inflow water and generates permeate which is provided to the boiler through the permeate line; a blowdown vessel in fluid communication with the boiler so as to receive hot blowdown water from the boiler, and a blowdown vessel outlet which is in fluid communication with the RO inlet through a blowdown return line, wherein in use the blowdown vessel generates cooled blowdown water; and a flow controller having a temperature sensor (or thermostat) arranged to monitor the temperature of the cooled blowdown water, wherein in use, if the temperature of the cooled blowdown water is below a threshold then the flow controller operates to direct the cooled blowdown water to the RO inlet.

By using cooled blowdown water from the blowdown vessel in the reverse osmosis unit, less blowdown water is discharged from the steam plant to drain. Therefore, the cost of disposing of the blowdown water from the steam plant may be reduced, thereby reducing the operating costs of the steam plant and reducing the environmental impact of the steam plant.

Further, the flow rate through the reverse osmosis unit and the temperature of the flow through the reverse osmosis unit may be increased, thereby increasing the efficiency of the reverse osmosis unit. This may allow the size of the reverse osmosis unit to be reduced.

The threshold may be 42 °C. The threshold may be between 30 °C and 50 °C, or between 35 °C and 45 °C, or between 37 °C and 42 °C.

The steam plant may further comprise a softener unit disposed in the blowdown return line between the blowdown vessel and the reverse osmosis unit. This softener unit acts to soften the cooled blowdown water from the blowdown vessel, before it is provided to the RO inlet of the reverse osmosis unit.

The steam plant may further comprise a storage tank arranged to receive and temporarily store cooled blowdown water, which may be received from the softener unit.

In use, if the temperature of the cooled blowdown water is above a threshold then the flow controller may operate to direct the cooled blowdown water to a drain. This ensures that if the temperature of the cooled blowdown water is determined to be of a temperature that would damage the semi-permeable membrane of the reverse osmosis unit, the cooled blowdown water is provided to a drain instead, rather than being provided to the RO inlet.

The steam plant may further comprise a heat exchanger, wherein in use, if the cooled blowdown water is above the threshold then the flow controller may operate to direct the cooled blowdown water to the heat exchanger. The heat exchanger may be arranged to pre-heat feedwater for the boiler. The heat exchanger allows the temperature of the cooled blowdown water to be further reduced to ensure that it is below a threshold, for example 43 °C, which is the maximum temperature at which it can be discharged to drain. Also, useful heat from the cooled blowdown water may be extracted by the heat exchanger, thereby improving the efficiency of the steam plant.

According to another aspect of the invention, there is provided a method of operating a steam plant comprising: providing hot blowdown water from the boiler to a blowdown vessel where it is mixed with colder water to generate cooled blowdown water; determining the temperature of cooled blowdown water; and providing the cooled blowdown water to the RO inlet of a reverse osmosis unit if the temperature of the cooled blowdown water is below a threshold.

The method may further comprise passing the cooled blowdown water through a softener unit before providing it to the reverse osmosis unit.

The method according may further comprise temporarily storing cooled blowdown water from the softener unit in a storage tank before it is provided to the reverse osmosis unit.

The method may further comprise sending the cooled blowdown water to a drain if the temperature of the cooled blowdown water is above a threshold.

The method may further comprise passing the cooled blowdown water through a heat exchanger if the cooled blowdown water is above a threshold.

According to another aspect of the invention, there is provided a method of modifying an existing steam plant comprising a boiler arranged to generate steam; a blowdown vessel in fluid communication with the boiler so as to receive blowdown water from the boiler and arranged to output cooled blowdown water from a blowdown vessel outlet; and a reverse osmosis unit having a permeate outlet in fluid communication with the boiler, the method comprising: fluidically connecting the blowdown vessel outlet with a RO inlet of the reverse osmosis unit such that during use of the steam plant, cooled blowdown water can be provided to the RO inlet.

The invention may comprise any combination of the features and/or limitations referred to herein, except combinations of such features as are mutually exclusive.

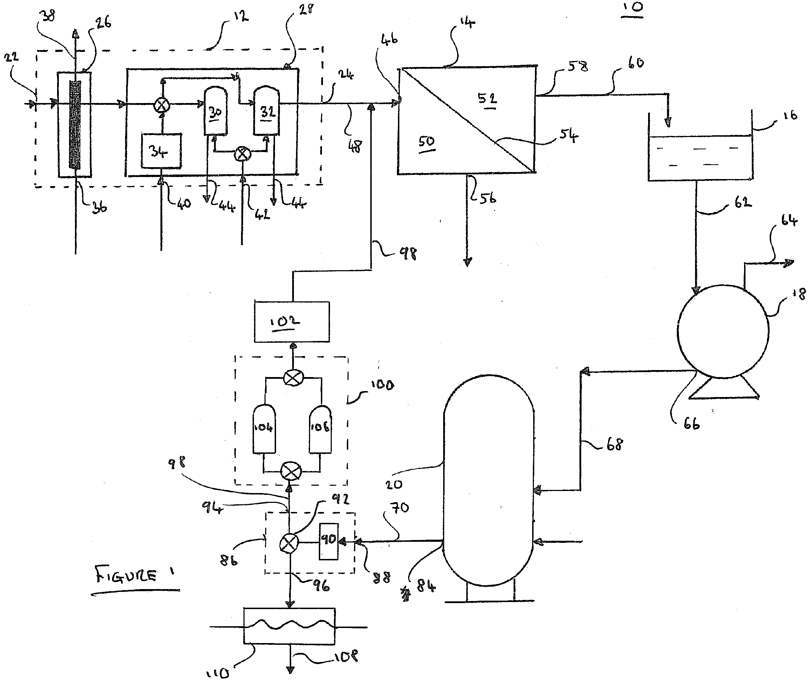

Embodiments of the present invention will now be described, by way of example, with reference to the accompanying Figure 1 which schematically shows part of a steam plant.

**Figure 1** schematically shows part of a steam plant 10 comprising a processing unit 12, a reverse osmosis unit 14, a feedtank (hotwell) 16, a boiler 18, and a blowdown vessel 20. In use, the processing unit 12 and reverse osmosis 14 treat raw water which is supplied to the boiler 18 via the feedtank 16 to generate steam. The steam generated by the boiler 18 is transferred through pipework at high temperature and pressure to various industrial processes where the energy in the steam is utilised (not shown). At periodic intervals, blowdown water is discharged from the boiler 18 to the blowdown vessel 20 where it is cooled and discharged. Although not shown in the schematic of Figure 1, various pumps, valves and sensors may be provided to control the flow of water and steam around the system.

The processing unit 12 has an inlet 22 for receiving raw water, and an outlet 24 for discharging treated water. The processing unit 12 comprises a filter 26, in the form of a carbon filter, and a softener unit 28 that are fluidically connected in series. The filter 26 is arranged to remove suspended solids from the raw water and the softener unit 28 is arranged to reduce the hardness of the water. The filter 26 is also provided with a flushing water line 36 and a drain line 38. The softener unit 28 includes first and second softener vessels 30, 32, each containing a resin to which sodium ions are bonded, and a brine tank 34 for regenerating the softener vessels 30, 32. The softener unit 28 is also provided with control valves that allow filtered water to flow through one softener vessel 30, 32 whilst the other softener vessel 30, 32 is being regenerated. This allows the softener unit 28 to be continuously used. The softener unit 28 is also provided with a brine tank fill line 40, a flushing water line 42, and drain lines 44.

Although it has been described that there is a filter 26 and a softener unit, in other embodiments only one may be present. For example, if the raw water is soft water, on only a filter may be provided. Further, additional water treatment devices or units may be incorporated into the processing unit 12 as necessary.

The outlet 24 of the processing unit 12 is fluidically connected to the RO inlet 46 of the reverse osmosis unit 14 with an inflow water line 48. This allows raw water treated by the processing unit 12 to be supplied to the reverse osmosis unit 14. The reverse osmosis unit 14 is arranged to reduce the total dissolved solids (TDS) value of treated inflow water provided from the processing unit 12. As schematically shown in Figure 1, the reverse osmosis unit 14 comprises an inflow chamber 50 and a permeate chamber 52 separated by a semi-permeable membrane 54. The RO inlet 46 opens into the inflow chamber 50 which is further provided with a concentrate outlet 56 from which concentrate, having a high TDS value, can be discharged. The permeate chamber 52 is provided with a permeate outlet 58 from which permeate, having a low TDS value, can be discharged. In use, the inflow chamber 50 is maintained under pressure and inflow water is provided to this chamber through the RO inlet 46. Pure water, known as permeate and low in impurities, passes through the membrane 54 where it can be discharged from the permeate outlet 58, whilst concentrate, high in impurities, can be drawn from the concentrate outlet 56.

The permeate outlet 58 of the reverse osmosis unit 14 is connected to a permeate line 60 which is configured to supply the permeate generated by the reverse osmosis unit 14 to the feedtank 16. In turn, the feedtank 16 is fluidically connected to the boiler 18 by a feedwater supply line 62 so that feedwater in the feedtank 16 can be supplied to the boiler 18. The boiler 62 is configured to generate steam from the feedwater and is provided with a steam supply line 64 for delivering and transferring the steam to various processes (not shown) within the steam plant.

The boiler 18 is also provided with a blowdown outlet 66 towards the bottom of the boiler to which a blowdown line 68 is attached. The blowdown line 68 connects the boiler 18 to the blowdown vessel 20 such that hot blowdown water can be discharged from the boiler 18 to the blowdown vessel 20. The blowdown vessel 20 is further provided with a blowdown line 70 which allows cooled blowdown water to be provided from the blowdown vessel 20 through a blowdown vessel outlet 84.

In addition to the components described above, the steam plant 10 further comprises a flow controller 86 that is operable to either direct cooled blowdown water to a drain, or to the RO inlet 46 of the reverse osmosis unit 14. The flow controller 86 comprises an inlet 88, a temperature sensor 90, a three-ay valve 92, a return outlet 94 and a drain outlet 96. The inlet 88 of the flow controller 86 is connected to the blowdown line 70 so that cooled blowdown water can be provided to the flow controller 86. The temperature sensor 90 is configured to monitor the temperature of the cooled blowdown water and the valve 92 is configured to direct the cooled blowdown water to either the return outlet 94 or the drain outlet 96 depending on the temperature.

The return outlet 94 of the flow controller 86 is fluidically connected to the RO inlet 46 by a blowdown return line 98 and a softener unit 100 and storage tank 102 are connected in series in the blowdown return line 98 between the flow controller 86 and the RO inlet 46. This allows cooled blowdown water to be provided to the reverse osmosis unit 14.

The softener unit 100 is similar to the softener unit 28 of the processing unit 12 and comprises two softener vessels 104 and 106 and a brine tank (not shown). The softener unit 100 operates in substantially the same way as softener unit 28 of the processing unit 12 to reduce the hardness of cooled blowdown water passing through it. It can also be regenerated from the brine tank (not shown) in the same manner. The storage tank 102 can temporarily store (softened) cooled blowdown water before it is provided to the reverse osmosis unit 14.

The drain outlet 96 of the flow controller 86 is connected to a drain line 108 and a heat exchanger 110 is disposed in the drain line 108. The heat exchanger 110 is arranged to extract useful heat form the cooled blowdown water. The heat exchanger 110 may be used to pre-heat boiler feedwater, for example, and as such may be disposed in the permeate line 40 such that it can pre-heat the permeate from the reverse osmosis unit 14 before it is passed to the feedtank 16.

In use, raw water is provided to the inlet 22 of the processing vessel 12 and is passed through the carbon filter 26 to remove any suspended particulate in the water. The filtered water is then passed through the softener unit 28 to reduce the hardness of the water. The softener unit 28 comprises two softener vessels 30, 32 and the filtered water is passed through one of these vessels 30, 32 whilst the other vessel is being regenerated (as will be explained below). As the filtered water is passed over the resin in the softener vessel 30, 32, the magnesium or calcium ions in the water displace and replace the sodium ions bonded to the resin. This therefore reduces the hardness of the water by replacing the magnesium and calcium ions with sodium ions. The filtered and softened water is then fed to the RO inlet 46 of the reverse osmosis unit 14 as treated inflow water through the inflow water line 48. The treated inflow water enters the inflow chamber 50 of the reverse osmosis unit 14 and is subjected to a high pressure. Permeate that is low in impurities, and which consequently has a low TDS value, passes through the membrane 54 to the permeate chamber 52, whilst concentrate high in impurities, and which consequently has a high TDS value, is retained in the inflow chamber 50. The concentrate is drawn through the concentrate outlet 56 of the reverse osmosis unit 14 at a known rate. The permeate, which is relatively soft and which has a relatively low TDS value, is fed to the feedtank 16 through the permeate line 60. Various chemicals are supplied to the feedwater in the feedtank 16. Boiler feedwater is fed to the boiler 18 through the feedwater supply line 62 where it is heated to generate steam. The steam is transferred to various industrial processes in the steam plant 10 through the steam supply line 64.

The impurities in the boiler water within the boiler 18 concentrate as they do not boil off and the TDS value of the boiler water therefore increases. As previously discussed, if the TDS value is too high then foam forms within the boiler which may be carried over into the remainder of the steam system. Therefore, at periodic intervals, blowdown water having a high TDS value is discharged from the boiler 18 through the blowdown outlet 66 to the blowdown vessel 20 via the blowdown water line 68. The temperature of the blowdown water is too high for it to be immediately discharged to a drain. Therefore, the hot blowdown water supplied to the blowdown vessel 20 is mixed with cooler water within the blowdown vessel 20 before it is output from the blowdown vessel 20 through blowdown vessel outlet 84.

In this embodiment, the cooled blowdown water is output through the blowdown vessel outlet 84 and is supplied to the flow controller 86. The temperature sensor 90 of the flow controller 86 monitors the temperature of the cooled blowdown water and the flow controller 86 determines if it is above or below a threshold, which in this embodiment is 42°C.

If the temperature of the cooled blowdown water is below the threshold, the flow controller 86 operates the valve 92 so as to direct the cooled blowdown water to the RO inlet 46 through the blowdown return line 98. Before reaching the reverse osmosis unit 14, the cooled blowdown water passes through one of the softener vessels 104, 106 of the softener unit 100. The softened cooled blowdown water is then passed to the storage tank 102, where it is temporarily stored, before it is provided to the RO inlet 46.

The threshold temperature of the flow controller 86 is set such that if the cooled blowdown water is directed to the RO inlet 46, by the time it reaches the reverse osmosis unit 14, it is below a temperature that would damage the membrane 54 of the reverse osmosis unit 14. For example, the membrane 54 may be able to withstand temperatures of up to 37 °C. If this is the case, the threshold of the flow controller 86 must be set such that by the time the cooled blowdown water reaches the reverse osmosis unit 14, it has a temperature of 37 °C or less. If the thermal loss of the water between the flow controller 86 and the reverse osmosis unit 14 is expected to be 5 °C, then the threshold of the flow controller 86 can be set at 42 °C. However, if the return line 98 is well insulated, the threshold may have to be reduced.

The cooled blowdown water provided to the RO inlet 46 will be of a higher temperature than the inflow water provided through the inflow water line 48 from the processing unit 12. The cooled blowdown water will therefore act to increase the temperature of the water in the reverse osmosis unit 14. This increase in temperature causes the reverse osmosis unit 14 to function more efficiently and may enable a smaller reverse osmosis unit to be used. Further, by supplying the cooled blowdown water to the RO inlet 46, the flow rate of the water through the reverse osmosis unit 14 will be increased. This also increases the efficiency of the reverse osmosis unit 14. Therefore, the use of cooled blowdown water in the reverse osmosis unit 14 provides improvements in the efficiency of the operation of the reverse osmosis unit and ensures that less blowdown water is discharged to drain, thereby at least reducing the cost of disposing of the blowdown water.

If the temperature of the cooled blowdown water is above the threshold, the flow controller 86 operates the valve 92 so as to direct the cooled blowdown water to the heat exchanger 110 and then to drain through the drain line 108. The heat exchanger 110 acts to further reduce the temperature of the cooled blowdown water and extracts useful energy that may used to pre-heat the feedwater. The heat exchanger 110 may act to further cool the blowdown water so that before it is discharged to drain, it is below a legal limit (e.g. 43 °C). If the heat exchanger 110 is used to pre-heat feedwater, this may increase the efficiency of the boiler 18.

Although it has been described that the threshold is 42°C, it should be appreciated that any suitable threshold temperature may be set.

Although not shown in Figure 1, an additional flow controller may be provided in the blowdown return line 98 before RO inlet 46. This additional flow controller may monitor the temperature of the cooled blowdown water in the blowdown return line 98 and if the temperature is above 37 °C, the water may be discharged to a drain, in order to protect the semi-permeable membrane of the reverse osmosis unit 14.

Although it has been described that the flow controller 86 comprises a temperature sensor 90, it should be appreciated that the temperature sensor may be a thermostat or a bi-metallic valve or any other suitable component for monitoring the temperature of the cooled blowdown water and controlling the opening or closing of a valve.

Some of the components of the steam plant 10 described above with reference to Figure 1 may already be present in an existing steam plant; although configured entirely differently. Therefore, it may be possible to upgrade or modify an existing steam plant 10 to use cooled blowdown water from the blowdown vessel 20 in other parts of the plant 10, thereby making the existing steam plant more efficient and environmentally friendly.

Where it has been described that a particular component is in fluid communication with another component by a particular line, it should be appreciated that this may be directly, or indirectly, and other components may be disposed in the fluid path between the two. For example, in the above described embodiment the reverse osmosis unit 14 is in fluid communication with the boiler 18 through the permeate line 60. However, a feedtank 16 is disposed in the fluid path between the two, and a further fluid line 62 from the feedtank 16 to the boiler 18 is provided.

## Claims

1. A steam plant (10), comprising:
a boiler (18) arranged to generate steam;
a reverse osmosis unit (14) having a RO inlet (46) arranged to receive inflow water and a permeate outlet (58) in fluid communication with the boiler (18) through a permeate line (60), wherein in use the reverse osmosis unit (14) receives inflow water and generates permeate which is provided to the boiler (18) through the permeate line (60);
a blowdown vessel (20) in fluid communication with the boiler (18) so as to receive hot blowdown water from the boiler (18), and a blowdown vessel outlet (84) which is in fluid communication with the RO inlet (46) through a blowdown return line (98), wherein in use the blowdown vessel (20) generates cooled blowdown water; and
**characterized by** further comprising a flow controller (86) having a temperature sensor (90) arranged to monitor the temperature of the cooled blowdown water, wherein in use, if the temperature of the cooled blowdown water is below a threshold then the flow controller (86) operates to direct the cooled blowdown water to the RO inlet (46).

2. A steam plant (10) according to claim 1, further comprising a softener unit (28) disposed in the blowdown return line (98) between the blowdown vessel (20) and the reverse osmosis unit (14).

3. A steam plant (10) according to claim 2, further comprising a storage tank (102) arranged to receive and temporarily store cooled blowdown water from the softener unit (28).

4. A steam plant (10) according to any preceding claim, wherein in use, if the temperature of the cooled blowdown water is above a threshold then the flow controller (86) operates to direct the cooled blowdown water to a drain.

5. A steam plant (10) according to claim 4, further comprising a heat exchanger (110), wherein in use, if the cooled blowdown water is above the threshold then the flow controller (86) operates to direct the cooled blowdown water to the heat exchanger (110).

6. A method of operating a steam plant (10) according to any of claims 1 to 5 comprising:
providing hot blowdown water from a boiler (18) to a blowdown vessel (20) where it is mixed with colder water to generate cooled blowdown water;
determining the temperature of cooled blowdown water; and
**characterized by** providing the cooled blowdown water to the RO inlet (46) of a reverse osmosis unit (14) if the temperature of the cooled blowdown water is below a threshold.

7. A method according to claim 6, further comprising:
passing the cooled blowdown water through a softener unit (28) before providing it to the reverse osmosis unit (14).

8. A method according to claim 7, further comprising:
temporarily storing cooled blowdown water from the softener unit (28) in a storage tank (102) before it is provided to the reverse osmosis unit (14).

9. A method according to any of claims 6-8, further comprising:
sending the cooled blowdown water to a drain if the temperature of the cooled blowdown water is above a threshold.

10. A method according to claim 9, further comprising:
passing the cooled blowdown water through a heat exchanger (110) if the cooled blowdown water is above a threshold.

11. A method of modifying an existing steam plant, comprising a boiler (18) arranged to generate steam; a blowdown vessel (20) in fluid communication with the boiler (18) so as to receive blowdown water from the boiler (18) and arranged to output cooled blowdown water from a blowdown vessel outlet (84); and a reverse osmosis unit (14) having a permeate outlet (58) in fluid communication with the boiler (18), to provide a steam plant (10) in accordance with any of claims 1-5, the method comprising:
fluidically connecting the blowdown vessel outlet (84) with a RO inlet (46) of the reverse osmosis unit (14) such that during use of the steam plant (10), cooled blowdown water can be provided to the RO inlet (46); and
**characterized by** providing a flow controller (86) having a temperature sensor (90) arranged to monitor the temperature of the cooled blowdown water, wherein in use of the steam plant (10), if the temperature of the cooled blowdown water is below a threshold then the flow controller (86) operates to direct the cooled blowdown water to the RO inlet (46).

## Patentansprüche

1. Dampfanlage (10), die Folgendes umfasst:
einen Kessel (18), angeordnet zum Erzeugen von Dampf;
eine Umkehrosmoseeinheit (14) mit einem UO-Einlass (46), der angeordnet ist, um einströmendes Wasser aufzunehmen, und einen Permeatauslass (58) in Fluidverbindung mit dem Kessel (18) über eine Permeatleitung (60), wobei die Umkehrosmoseeinheit (14) im Einsatz einströmendes Wasser aufnimmt und Permeat erzeugt, das dem Kessel (18) durch die Permeatleitung (60) bereitgestellt wird;
einen Abschlämmbehälter (20) in Fluidverbindung mit dem Kessel (18), um heißes Abschlämmwasser aus dem Kessel (18) aufzunehmen, und einen Abschlämmbehälterauslass (84), der über eine Abschlämmrückführungsleitung (98) in Fluidverbindung mit dem UO-Einlass (46) steht,
wobei der Abschlämmbehälter (20) im Einsatz gekühltes Abschlämmwasser erzeugt; und
**dadurch gekennzeichnet, dass** sie ferner eine Durchflusssteuerung (86) mit einem Temperatursensor (90) umfasst, angeordnet, um die Temperatur des gekühlten Abschlämmwassers zu überwachen, wobei im Einsatz, wenn die Temperatur des gekühlten Abschlämmwassers unter einer Schwelle ist, die Durchflussteuerung (86) arbeitet, um das gekühlte Abschlämmwasser zum UO-Einlass (46) zu leiten.

2. Dampfanlage (10) nach Anspruch 1, ferner umfassend eine Enthärtereinheit (28), angeordnet in der Abschlämmrückführungsleitung (98) zwischen dem Abschlämmbehälter (20) und der Umkehrosmoseeinheit (14).

3. Dampfanlage (10) nach Anspruch 2, ferner umfassend einen Speicherbehälter (102), angeordnet zum Aufnehmen und vorübergehenden Speichern von gekühltem Abschlämmwasser aus der Enthärtereinheit (28).

4. Dampfanlage (10) nach einem der vorhergehenden Ansprüche, wobei im Einsatz, wenn die Temperatur des gekühlten Abschlämmwassers über der Schwelle ist, die Durchflusssteuerung (86) arbeitet, um das gekühlte Abschlämmwasser zu einem Ablauf zu leiten.

5. Dampfanlage (10) nach Anspruch 4, ferner umfassend einen Wärmetauscher (110), wobei im Einsatz, wenn das gekühlte Abschlämmwasser über der Schwelle ist, die Durchflusssteuerung (86) arbeitet, um das gekühlte Abschlämmwasser zu dem Wärmetauscher (110) zu leiten.

6. Verfahren zum Betreiben einer Dampfanlage (10) nach einem der Ansprüche 1 bis 5, das Folgendes umfasst:
Bereitstellen von heißem Abschlämmwasser aus einem Kessel (18) zu einem Abschlämmbehälter (20), wo es mit kälterem Wasser gemischt wird, um gekühltes Abschlämmwasser zu erzeugen;
Bestimmen der Temperatur des gekühlten Abschlämmwassers; und
**gekennzeichnet durch** Bereitstellen des gekühlten Abschlämmwassers zum UO-Einlass (46) einer Umkehrosmoseeinheit (14), wenn die Temperatur des gekühlten Abschlämmwassers unter einer Schwelle ist.

7. Verfahren nach Anspruch 6, das ferner Folgendes umfasst:
Durchleiten des gekühlten Abschlämmwassers durch eine Enthärtereinheit (28), bevor es an der Umkehrosmoseeinheit (14) bereitgestellt wird.

8. Verfahren nach Anspruch 7, das ferner Folgendes umfasst:
vorübergehendes Speichern des gekühlten Abschlämmwassers aus der Enthärtereinheit (28) in einem Speicherbehälter (102), bevor es an der Umkehrosmoseeinheit (14) bereitgestellt wird.

9. Verfahren nach einem der Ansprüche 6-8, das ferner Folgendes umfasst:
Senden des gekühlten Abschlämmwassers zu einem Ablauf, wenn die Temperatur des gekühlten Abschlämmwassers über einer Schwelle ist.

10. Verfahren nach Anspruch 9, das ferner Folgendes umfasst:
Durchleiten des gekühlten Abschlämmwassers durch einen Wärmetauscher (110), wenn das gekühlte Abschlämmwasser über einer Schwelle ist.

11. Verfahren zum Modifizieren einer vorhandenen Dampfanlage, umfassend einen Kessel (18), angeordnet zum Erzeugen von Dampf; einen Abschlämmbehälter (20) in Fluidverbindung mit dem Kessel (18), um das Abschlämmwasser aus dem Kessel (18) aufzunehmen, und angeordnet zum Ausgeben von gekühltem Abschlämmwasser aus einem Abschlämmbehälterauslass (84); und eine Umkehrosmoseeinheit (14) mit einem Permeatauslass (58) in Fluidverbindung mit dem Kessel (18), zum Bereitstellen einer Dampfanlage (10) nach einem der Ansprüche 1-5, wobei das Verfahren Folgendes umfasst:
fluidisches Verbinden des Abschlämmbehälterauslasses (84) mit einem UO-Einlass (46) der Umkehrosmoseeinheit (14), sodass während des Einsatzes der Dampfanlage (10) gekühltes Abschlämmwasser am UO-Einlass (46) bereitgestellt werden kann; und
**dadurch gekennzeichnet, dass** es eine Durchflusssteuerung (86) mit einem Temperatursensor (90) bereitstellt, angeordnet, um die Temperatur des gekühlten Abschlämmwassers zu überwachen, wobei im Einsatz der Dampfanlage (10), wenn die Temperatur des gekühlten Abschlämmwassers unter einer Schwelle ist, die Durchflussteuerung (86) arbeitet, um das gekühlte Abschlämmwasser zum UO-Einlass (46) zu leiten.

## Revendications

1. Centrale à vapeur (10), comprenant :
une chaudière (18) conçue pour produire de la vapeur ;
une unité d'osmose inverse (14) possédant une admission d'OI (46) conçue pour recevoir un flux entrant d'eau et un orifice d'évacuation (58) de perméat en communication fluidique avec la chaudière (18) par l'intermédiaire d'une conduite (60) de perméat, dans laquelle, lors de l'utilisation, l'unité d'osmose inverse (14) reçoit le flux entrant d'eau et produit un perméat qui est introduit dans la chaudière (18) par l'intermédiaire de la conduite (60) de perméat ;
un récipient de purge (20) en communication fluidique avec la chaudière (18) de façon à recevoir l'eau de purge chaude en provenance de la chaudière (18), et un orifice d'évacuation (84) de récipient de purge qui est en communication fluidique avec l'admission d'OI (46) par l'intermédiaire d'une conduite de retour de purge (98),
dans laquelle, lors de l'utilisation, le récipient de purge (20) produit de l'eau de purge refroidie ; et
**caractérisée en ce qu'**elle comporte en outre un régulateur de débit (86) possédant un capteur de température (90) conçu pour surveiller la température de l'eau de purge refroidie, lors de l'utilisation, si la température de l'eau de purge refroidie est inférieure à un seuil, alors le régulateur de débit (86) fonctionnant pour orienter l'eau de purge refroidie vers l'admission d'OI (46).

2. Centrale à vapeur (10) selon la revendication 1, comprenant en outre une unité d'adoucisseur (28) disposée dans la conduite de retour de purge (98) entre le récipient de purge (20) et l'unité d'osmose inverse (14).

3. Centrale à vapeur (10) selon la revendication 2, comprenant en outre une cuve de stockage (102) conçue pour recevoir et stocker temporairement l'eau de purge refroidie en provenance de l'unité d'adoucisseur (28).

4. Centrale à vapeur (10) selon l'une quelconque des revendications précédentes, dans laquelle, lors de l'utilisation, si la température de l'eau de purge refroidie est supérieure à un seuil, alors le régulateur de débit (86) fonctionne pour orienter l'eau de purge refroidie vers un drain.

5. Centrale à vapeur (10) selon la revendication 4, comprenant en outre un échangeur de chaleur (110), dans laquelle lors de l'utilisation, si l'eau de purge refroidie est supérieure au seuil, alors le régulateur de débit (86) fonctionne pour orienter l'eau de purge refroidie vers l'échangeur de chaleur (110).

6. Procédé de fonctionnement d'une centrale à vapeur (10) selon l'une quelconque des revendications 1 à 5 consistant à :
introduire de l'eau de purge chaude en provenance d'une chaudière (18) dans un récipient de purge (20) où elle est mélangée à de l'eau froide pour donner de l'eau de purge refroidie ;
déterminer la température de l'eau de purge refroidie ; et
**caractérisé en ce qu'**il introduit l'eau de purge refroidie dans l'admission d'OI (46) d'une unité d'osmose inverse (14) si la température de l'eau de purge refroidie est inférieure à un seuil.

7. Procédé selon la revendication 6, consistant en outre à :
faire passer l'eau de purge refroidie à travers une unité d'adoucisseur (28) avant de l'introduire dans l'unité d'osmose inverse (14).

8. Procédé selon la revendication 7, consistant en outre à :
stocker temporairement l'eau de purge refroidie provenant de l'unité d'adoucisseur (28) dans une cuve de stockage (102) avant qu'elle soit introduite dans l'unité d'osmose inverse (14).

9. Procédé selon l'une quelconque des revendications 6 à 8, consistant en outre à :
envoyer l'eau de purge refroidie vers un drain si la température de l'eau de purge refroidie est supérieure à un seuil.

10. Procédé selon la revendication 9, consistant en outre à :
faire passer l'eau de purge refroidie à travers un échangeur de chaleur (110) si l'eau de purge refroidie est supérieure à un seuil.

11. Procédé de modification d'une centrale à vapeur existante, comportant une chaudière (18) conçue pour produire de la vapeur ; un récipient de purge (20) en communication fluidique avec la chaudière (18) de façon à recevoir l'eau de purge en provenance de la chaudière (18) et conçu pour sortir l'eau de purge refroidie par un orifice d'évacuation (84) de récipient de purge ; et une unité d'osmose inverse (14) possédant un orifice d'évacuation (58) de perméat en communication fluidique avec la chaudière (18), pour fournir une centrale à vapeur (10) selon l'une quelconque des revendications 1 à 5, le procédé consistant à :
raccorder fluidiquement l'orifice d'évacuation (84) de récipient de purge à une admission d'OI (46) de l'unité d'osmose inverse (14) de sorte que, lors de l'utilisation de la centrale à vapeur (10), l'eau de purge refroidie puisse être introduite dans l'admission d'OI (46) ; et
**caractérisé en ce qu'**il fournit un régulateur de débit (86) possédant un capteur de température (90) conçu pour surveiller la température de l'eau de purge refroidie, dans lequel, lors de l'utilisation de la centrale à vapeur (10), si la température de l'eau de purge refroidie est inférieure à un seuil, alors le régulateur de débit (86) fonctionne pour orienter l'eau de purge refroidie vers l'admission d'OI (46).
